# EUROPÄISCHE PATENTANMELDUNG

(11) **EP 3 855 264 A1**
(43) Veröffentlichungstag der Anmeldung: **28.07.2021**
(21) Anmeldenummer: 20152986.4
(22) Anmeldetag: 21.01.2020
(51) Int. Cl.: G05B 23/02

(54) **VERFAHREN ZUM AUTOMATISCHEN ÜBERPRÜFEN EINES VERHALTENS EINER KONFIGURATION EINES GERÄTS**

(71) Anmelder: SICK AG, 79183 Waldkirch (DE)
(72) Erfinder: Fecher, Harald, 79111 Freiburg (DE); Wehrle, Martin, 79111 Freiburg (DE)

(57) **Zusammenfassung**

Um einen Nutzer bei einer Überprüfung seiner getätigten Konfiguration eines Geräts (1) auf einfacher Art und Weise zu unterstützen, wird ein Verfahren zum automatischen Überprüfen eines Verhaltens einer Konfiguration eines Geräts (1) mit zumindest einem Parameter (I1 bis I5; O1 bis O4; 1a, 1b, 1c) bereitgestellt, umfassend die Schritte a) Bereitstellen des Parameters (I1 bis I5; O1 bis O4; 1a, 1b, 1c), b)Zuweisen von Werten (v1, v2, vI1 bis I5; O1 bis O4) zu dem Parameter (I1 bis I5; O1 bis O4; 1a, 1b, 1c), so dass die Konfiguration des Geräts (1) erstellt ist, wobei die zugewiesenen Werte (v1, v2, vI1 bis I5; O1 bis O4) eine konfigurierte Geräteeigenschaft des Geräts (1) bewirken, c) Beschreiben von wenigstens einer vom Nutzer erwarteten Geräteeigenschaft des Geräts (1), die durch die erstellte Konfiguration erfüllt werden soll, d) automatisches Überprüfen, ob die konfigurierte Geräteeigenschaft aus dem Schritt b) und die beschriebene, erwartete Geräteeigenschaft aus dem Schritt c) zu übereinstimmenden Ergebnissen des Geräts (1) führen oder ob sich zumindest ein Ergebnis der konfigurierten Geräteeigenschaft ergibt, das zu einem Widerspruch zu den Ergebnissen der erwarteten Geräteeigenschaft führt, und e) Anzeigen eines Überprüfungsergebnisses aus dem Schritt d), um das automatische Überprüfen durch den Nutzer bewertet zu werden.

## Beschreibung

Die Erfindung betrifft ein Verfahren zum automatischen Überprüfen eines Verhaltens einer Konfiguration eines Geräts mit zumindest einem Parameter gemäß dem Anspruch 1.

Die Erstellung von Gerätekonfigurationen wird mit zunehmender Größe und Vernetzung der Geräte ebenso zunehmend komplex. Resultierende Anwendungen können beispielsweise aus einer Vielzahl von Sensoren bestehen (z.B. Scanner mit einer großen Anzahl von unterschiedlichen Schutzfeldern und Schutzfällen, Lichtgitter...), die in einem Netzwerk über eine oder mehrere Steuerungen miteinander interagieren, und deren Verhalten durch eine Logik definiert wird, die aus hunderten von Bausteinen besteht. Hierbei wird die Logik von zumindest einem Nutzer vorher konfiguriert.

Die zunehmende Komplexität hat zur Folge, dass es für den Nutzer entsprechend schwieriger wird, eine Korrektheit der von ihm erstellten Konfiguration zu validieren, in dem Sinne, dass eine konfigurierte Anwendung auch ein von ihm intendiertes Verhalten aufweist. Mit anderen Worten, es wird für den Nutzer schwierig, durch "genaues Hinschauen" auszuschließen, dass es keinen Sonderfall gibt, der von der Konfiguration (z.B. in der Logik) nicht abgedeckt wird, und ebenso, dass es keine subtil "versteckten" Seiteneffekte gibt, die unter Umständen zwar nur selten auftreten, aber fehlerhaftes Verhalten zur Folge haben können.

Aus diesem Grund ist es wünschenswert, dem Nutzer eine toolseitige Hilfestellung zu geben, um zu überprüfen, ob das intendierte Verhalten auch einem konfigurierten Verhalten entspricht. Wenn das konfigurierte von dem intendierten Verhalten abweicht, wäre es darüber hinaus hilfreich, konkrete Beispielfälle zu erhalten, für die das konfigurierte Verhalten noch nicht korrekt ist.

Aus dem Stand der Technik bekannte Engineering-Tools unterstützen dem Nutzer nur in eingeschränktem Umfang, indem der Nutzer beispielsweise darüber informiert wird, wenn die Konfiguration des Gerätes noch nicht vollständig abgeschlossen ist (z.B. wenn noch eine Verdrahtung eines Eingangs- oder Ausgangs-Pins fehlt), oder wenn falsche Typen von Geräten verwendet werden (z.B. wenn versucht wird, ein Pin mit einem Gerät zu verdrahten, das an dieser Stelle nicht verdrahtet werden darf), oder wenn Geräte angelegt werden, die nicht verwendet werden dürfen.

Diese Kriterien können basierend auf Angaben überprüft werden, die dem Engineering-Tool statisch vorliegen, ohne dass die konkrete Struktur der zu konfigurierenden Anwendung bekannt sein muss.

Statische Verfahren zur Überprüfung haben den Nachteil, dass die Struktur der Anwendung nicht betrachtet wird. Wird eine Anwendung konfiguriert, die zwar die statisch überprüfbaren Eigenschaften, wie beispielsweise Typ-Korrektheit der Verdrahtungen, erfüllt, aber ein gänzlich anderes Verhalten als das vom Nutzer gewünschte Verhalten aufweist, kann dies nicht erkannt werden.

Es ist eine Aufgabe der vorliegenden Erfindung, ein Verfahren zum automatischen Überprüfen eines Verhaltens einer Konfiguration eines Geräts mit zumindest einem Parameter zur Verfügung zu stellen, das einem Nutzer bei der Überprüfung seiner getätigten Konfiguration auf einfacher Art und Weise unterstützt.

Die Aufgabe wird erfindungsgemäß durch ein Verfahren zum automatischen Überprüfen eines Verhaltens einer Konfiguration eines Geräts mit zumindest einem Parameter mit den Merkmalen des Anspruchs 1 gelöst.

Mit anderen Worten, das Verfahren umfasst die Schritte a) eines Bereitstellens des zumindest einen Parameters, und b) eines Zuweisens von Werten zu dem Parameter, so dass die Konfiguration des Geräts hierdurch erstellt ist, wobei die zugewiesenen Werte eine konfigurierte Geräteeigenschaft des Geräts bewirken. Mit anderen Worten, durch die Schritte a) und b) erhält der Nutzer ein konfiguriertes, insbesondere elektronisches, Gerät, das ein Verhalten aufweist, das der konfigurierten Geräteeigenschaft entspricht. Ferner umfasst das Verfahren den Schritt c) eines Beschreibens von wenigstens einer vom Nutzer erwarteten Geräteeigenschaft des Geräts, die durch die erstellte Konfiguration erfüllt werden soll. Das heißt, der Nutzer definiert ein von ihm gewünschtes Verhalten als erwartete Geräteigenschaft des Geräts. Weiterhin umfasst das Verfahren den Schritt d) eines automatischen Überprüfens, ob die konfigurierte Geräteeigenschaft aus dem Schritt b) und die beschriebene, erwartete Geräteeigenschaft aus dem Schritt c) zu übereinstimmenden Ergebnissen des Geräts führen oder ob sich zumindest ein Ergebnis der konfigurierten Geräteeigenschaft ergibt, das zu einem Widerspruch zu den Ergebnissen der erwarteten Geräteeigenschaft führt, und den Schritt e) eines Anzeigens eines Überprüfungsergebnisses aus dem Schritt d), um das automatische Überprüfen durch den Nutzer bewertet zu werden.

Die konfigurierte Geräteeigenschaft wird in diesem Zusammenhang also insbesondere als ein Verhalten des Geräts verstanden, das aufgrund der Konfiguration während dem Betrieb des Geräts eintreten soll, wie beispielsweise ein Abbremsen einer Maschine als Verhalten einer Steuerung, wenn ein Stoppsignal ausgelöst wurde. Hierbei entspricht die erwartete Geräteeigenschaft beispielsweise ein Bremsverhalten des Geräts nach dem Auslösen des Stoppsignals, das erfüllt sein muss, wie beispielsweise eine bestimmte Geschwindigkeitsabnahme mit der Zeit, so dass das Abbremsen der Maschine hinreichend schnell umgesetzt wird.

Hieraus ergibt sich der Vorteil, dass der Nutzer die Überprüfung des Verhaltens der Konfiguration des Geräts einfach durchführen kann, da beispielweise eine Abweichung zwischen der konfigurierten Geräteeigenschaft und der erwarteten Geräteeigenschaft ein klarer Fehler zwischen der erstellten Konfiguration und dem intendierten Ergebnis der Konfiguration darstellt. Das heißt mit anderen Worten, die zugewiesenen Werte zu dem/den Parameter/n führen nicht zu dem gewünschten Resultat des Verhaltens des Geräts.

Gemäß einem bevorzugten Ausführungsbeispiel wird der Parameter als Funktionselement, Logikelement oder Kommunikationselement zwischen den Funktionselementen bzw. Logikelementen definiert und die Werte des Parameters umfassen ein logisches Wahr oder Falsch, eine Zahl, einen Zahlenbereich oder eine Funktion. Das heißt, dass beispielsweise die erwähnte Steuerung das Abbremsen der Maschine als Funktionselement aufweist, das die konfigurierte Geräteeigenschaft wiedergibt.

Ferner wird gemäß einem weiteren bevorzugten Ausführungsbeispiel das Beschreiben im Schritt c) mittels einer Programmiersprache, einer Spezifikation einer logischen Formel, einer Auswahl aus einer Menge von toolseitig vordefinierten Geräteeigenschaften, einer Konfiguration über Parameterwerte, einer Spezifikation eines Ablaufdiagramms, oder einer Spezifikation einer Baumstruktur durchgeführt. Der Nutzer hat damit verschiedenste Möglichkeiten, die erwartete bzw. intendierte Geräteeigenschaft in seinem Sinne und insbesondere entsprechend seines Wissensniveaus zu beschreiben.

Insbesondere wird gemäß einem weiteren bevorzugten Ausführungsbeispiel das Beschreiben im Schritt c) mittels eines Assistentenprogramms durchgeführt, wobei das Assistentenprogramm durch gezielte Fragestellungen an den Nutzer zu der vom Nutzer gewünschten Geräteeigenschaft hinführt, die überprüft werden soll. Die Geräteeigenschaft wird also insbesondere vom Assistentenprogramm, das auch als Wizard bezeichnet wird, basierend auf den Antworten des Nutzers abgeleitet.

Weiterhin wird gemäß einem weiteren bevorzugten Ausführungsbeispiel die erwartete Geräteeigenschaft im Schritt c) durch Laufzeitwerte beschrieben, wobei insbesondere die erwartete Geräteeigenschaft für mindestens zwei verschiedene Zeitpunkte spezifiziert wird. Das heißt, zeitabhängige Effekte der Konfiguration lassen sich damit mitberücksichtigen.

Zusätzlich wird vorzugsweise das Überprüfen im Schritt d) mittels eines Algorithmus ausgeführt, der die aus der konfigurierten Geräteeigenschaft resultierenden Ergebnisse mit den aus der erwarteten Geräteeigenschaft resultierenden Ergebnissen vergleicht.

Solche Algorithmen umfassen beispielsweise angepasste Algorithmen, die beispielsweise auf einer *"Brute-Force-"* oder *"Abstraktions-Methodik" beruhen,* und führen das Überprüfen der Geräteeigenschaft/en auf jeweils entsprechend unterschiedliche Art und Weise durch.

An dieser Stelle sei erwähnt, dass auf Brute-Force-Methodik basierende Algorithmen typerweise eine komplette Simulation aller möglichen Abläufe und Zustände (und deren Konsequenzen) der Konfiguration durchführen, und diese mit den vom Nutzer erwarteten Geräteeigenschaften vergleichen. Bei den auf Abstraktion basierenden Algorithmen wird ein resultierender Zustandsraum der Konfiguration abstrahiert und damit typerweise verkleinert, um dann die vom Nutzer erwarteten Geräteeigenschaften im entsprechend abstrahierten Zustandsraum zu untersuchen.

Vorteilhafterweise identifiziert und zeigt der Algorithmus zumindest einen Wert an, der zu einer Abweichung zwischen der konfigurierten Geräteeigenschaft und der erwarteten Geräteeigenschaft geführt hat, sofern eine solche Abweichung gefunden wurde.

Gemäß einem weiteren bevorzugten Ausführungsbeispiel werden im Schritt d) die konfigurierte Geräteeigenschaft entsprechend den zugewiesenen Werten zu einem Zustand des Parameters überprüft und die erwartete Geräteeigenschaft in Abhängigkeit von mehreren Zeitpunkten des Parameters überprüft. Hierdurch ist dem Nutzer ermöglicht, nicht nur ein statisches Verhalten des Geräts, das durch die konfigurierte Geräteeigenschaft wiedergegeben ist, sondern auch ein dynamisches Verhalten des Geräts, das durch die beschriebene erwartete Geräteeigenschaft wiedergegeben ist, zu überprüfen.

Vorteilhafterweise identifiziert und zeigt der Algorithmus einen zeitlichen Verlauf über mindestens zwei Zeitpunkte an, der zu einer Abweichung zwischen der konfigurierten Geräteeigenschaft und der erwarteten Geräteeigenschaft geführt hat, sofern ein solcher zeitliche Verlauf gefunden wurde.

Insbesondere zeigt das Überprüfungsergebnis vorzugsweise alle konsistenten bzw. erfüllten Ergebnisse bzw. Geräteeigenschaften oder zumindest eine konfigurierte Geräteeigenschaft an, die zu der Abweichung geführt hat. Vorteilhafterweise wird bei einer Mehrzahl an Parametern der Parameter im Schritt e) angezeigt, der zu einer Inkonsistenz zwischen den Ergebnissen der konfigurierten und erwarteten Geräteeigenschaft geführt hat. Hierbei ist eine überschaubare Übersicht der Überprüfungsergebnisse für den Nutzer erzielbar, so dass die Überprüfung für den Nutzer vereinfacht ist.

Vorzugsweise wird eine Korrekturmöglichkeit der angezeigten Parameter und/oder der zugewiesenen Werte des Parameters dem Nutzer bereitgestellt, um die Inkonsistenz zu beseitigen.

Gemäß einem weiteren bevorzugten Ausführungsbeispiel ist das Beschreiben der erwarteten Geräteeigenschaft im Schritt c) nach den Schritten a) und b) oder auch vor denselben ausführbar. Der Nutzer hat somit volle Flexibilität die Konfiguration des Geräts und dessen Überprüfung zu erstellen.

Weiterhin wird gemäß einem bevorzugten Ausführungsbeispiel anhand des Überprüfungsergebnisses im Schritt d) eine genauere Spezifizierung der beschriebenen, erwarteten Geräteeigenschaft im Schritt c) oder ein Hinzufügen von weiteren erwarteten Geräteeigenschaften zum Überprüfen oder eine Validierung der erstellten Konfiguration in einem Schritt f) bereitgestellt, wobei insbesondere eine Auswahl der genaueren Spezifikation zusätzlich aus einer vom Tool vorgeschlagenen Menge dem Nutzer bereitgestellt wird, und wobei insbesondere die genauere Spezifikation sich sowohl auf die erwarteten Geräteeigenschaften als auch auf zu erwartende Werte beziehen kann. Der Nutzer ist damit in der Lage, eine präzisere und mehr automatisierte Überprüfung der Konfiguration zu erstellen.

Vorteilhafterweise wird das automatische Überprüfen manuell vom Nutzer oder automatisch nach Erfassen eines ersten Widerspruchs oder nach Ablauf einer maximalen Überprüfungszeit beendet.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an den unabhängigen Anspruch anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: ein schematisches Beispiel eines mit dem erfindungsgemäßen Verfahren zu konfigurierenden und zu überprüfenden Geräts,
- Fig. 2A: ein schematisch beispielhafter Ablauf des erfindungsgemäßen Verfahrens, und
- Fig. 2B: ein schematischer Ablauf eines weiteren Ausführungsbeispiels des erfindungsgemäßen Verfahrens.

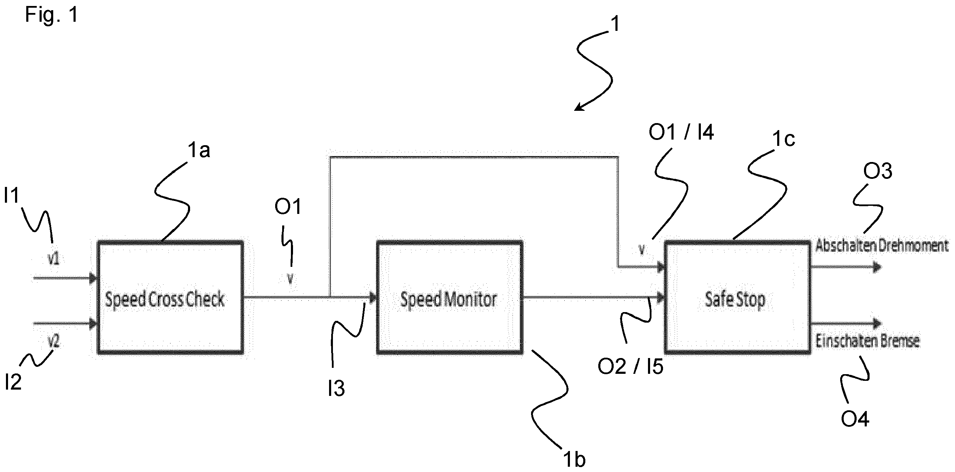

Die Figur 1 zeigt ein schematisches Beispiel eines elektronischen Geräts 1, das in dem gezeigten bevorzugten Ausführungsbeispiel aus einem Logikschaltkreis zur Umsetzung einer Geschwindigkeitsüberwachung besteht. Das Gerät 1 kann insbesondere auch einen Sensor, einen elektrischen Motor, eine Steuerung oder eine Kombination, die aus dem Sensor, dem elektrischen Motor, der Steuerung und/oder dem Logikschaltkreis besteht, repräsentieren.

Das elektronische Gerät 1 umfasst bei dem dargestellten Ausführungsbeispiel einen sogenannten *"Speed Cross Check*"-Baustein 1a, einen sogenannten *"Speed Monitor"-*Baustein 1b und einen sogenannten *"Safe* Stop"-Baustein 1c, wobei die Bausteine 1a bis 1c insbesondere jeweilige Funktions- bzw. Logikelemente darstellen. Hierbei dient der Baustein 1a dazu, aus zwei gemessene Motor-Geschwindigkeitswerte (v1 und v2) als erstes und zweites Eingangssignal I1 und I2 ein sicheres Geschwindigkeits-Ausgangssignal O1 zu garantieren. Das heißt, sind die beiden ersten und zweiten Eingangssignale I1 und I2 identisch, dann werden diese gemessene Motor-Geschwindigkeitswerte v1 und v2 als korrekt angenommen und ein sicherer und korrekter Motor-Geschwindigkeitswert v (v = v1 = v2) als das erste Ausgangssignal O1 an die beiden folgenden Bausteine 1b und 1c kommuniziert.

Im Falle, dass sich die beiden gemessene Motor-Geschwindigkeitswerte v1 und v2 unterscheiden, wird ein Fehlersignal erzeugt und das Fehlersignal als das erste Ausgangssignal O1 weiter kommuniziert.

Der Baustein 1b erhält den sicheren Motor-Geschwindigkeitswert v bzw. das erste Ausgangssignal O1 des Bausteins 1a als ein drittes Eingangssignal I3 und überwacht den Motor-Geschwindigkeitswert v bzw. das dritte Eingangssignal I3. Übersteigt der Motor-Geschwindigkeitswert v bzw. das dritte Eingangssignal I3 einen vom Nutzer vorgegebenen Schwellenwert, dann wird ein "*Stop*"-Signal als ein zweites Ausgangssignal O2 vom Baustein 1b gesetzt und an den Baustein 1c kommuniziert. Das "Stop"-Signal wird ebenfalls gesetzt und weiter kommuniziert, wenn das dritte Eingangssignal I3 das Fehlersignal des Bausteins 1a beinhaltet.

Ist das erste Ausgangssignal O1 bzw. das dritte Eingangssignal I3 kein Fehlersignal und bleibt es unterhalb des Schwellenwertes, dann setzt der Baustein 1b ein *"Nicht-Stop"-*Signal als das zweite Ausgangssignal O2 und kommuniziert dieses an den Baustein 1c.

Der Baustein 1c erhält das erste Ausgangssignal O1 des Bausteins 1a als viertes Eingangssignal I4 und das zweite Ausgangssignal O2 des Bausteins 1b als fünftes Eingangssignal I5. Ist das zweite Ausgangssignal O2 bzw. das fünfte Eingangssignal I5 ein *"Nicht-Stop"*-Signal*,* greift der Baustein 1c nicht in die Steuerung des Motors ein. Ist andererseits das zweite Ausgangssignal O2 bzw. das fünfte Eingangssignal I5 ein "*Stop*"-Signal, erzeugt der Baustein 1c ein Abschaltsignal zum Abschalten des nicht dargestellten Motors und gibt dieses Abschaltsignal als ein drittes Ausgangssignal O3, in der Figur 1 als *"Abschalten Drehmoment"* gekennzeichnet, an den Motor aus.

Unter ständigem Vergleich des Motor-Geschwindigkeitswertes v als viertes Eingangssignal I4 bestimmt der Baustein 1c, ob eine Abnahme des Motor-Geschwindigkeitswertes v einer vom Nutzer vorgegebenen Verzögerung aufgrund des "*Stop*"-Signals entspricht oder nicht.

Falls die Verzögerung und damit die Abnahme der Geschwindigkeit des Motors nicht hinreichend schnell sein sollten, erzeugt der Baustein 1c ein viertes Ausgangssignal O4 zum Einschalten einer nicht dargestellten Bremse und gibt dieses vierte Ausgangssignal O4 aus, in der Figur 1 als *"Einschalten Bremse"* gekennzeichnet, so dass die Bremse zusätzlich aktiviert wird, um die Abnahme des Motor-Geschwindigkeitswertes v stärker durchzuführen. Wenn die Verzögerung hinreichend schnell sein sollte, so wird das vierte Ausgangssignal O4 durch den Baustein 1c nicht erzeugt.

An dieser Stelle sei erwähnt, dass die Eingangssignale I1 bis I5, die Ausgangssignale O1 bis O4 und die Bausteine 1a bis 1c als Parameter verstanden werden, denen Werte zur Konfiguration des Geräts 1 zugeordnet werden.

Ferner stellt das beschriebene Ausführungsbeispiel des Geräts 1 bzw. des Logikschaltkreises zur Geschwindigkeitsüberwachung lediglich eine abstrahierte Vereinfachung eines tatsächlichen, zu konfigurierenden und zu überprüfenden Logikschaltkreises zur Geschwindigkeitsüberwachung dar, da in der Praxis mehr Bausteine vorgesehen werden können und die beispielsweise beschriebenen Bausteine 1a bis 1c mehr Funktionalität aufweisen können.

Das beispielshaft beschriebene Gerät 1 bzw. der Logikschaltkreis und die entsprechende Konfiguration können durch einen Nutzer mittels des erfindungsgemäßen Verfahrens konfiguriert und automatisch überprüft werden.

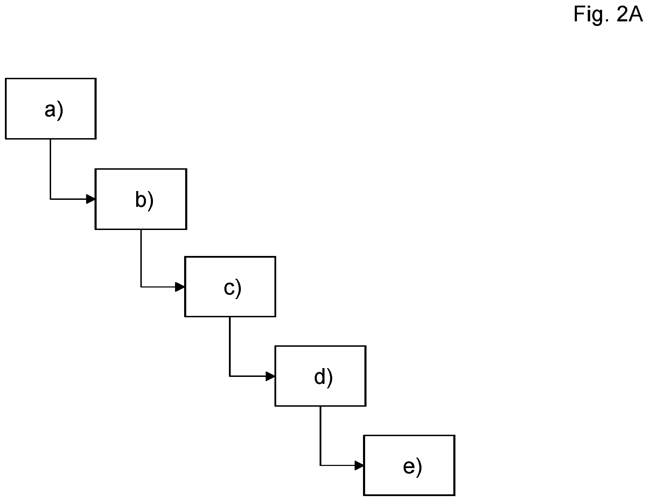

Gemäß der Figur 2A, die ein schematisch bevorzugtes Ablaufbeispiel des erfindungsgemäßen Verfahrens darstellt, stellt der Nutzer in einem Schritt a) die Parameter für das Gerät 1 bereit.

Bezogen auf das beschriebene Gerät 1 in der Figur 1 stellen das erste bis fünfte Eingangssignal I1 bis I5 bzw. das erste bis vierte Ausgangssignal O1 bis O4 und die Bausteine 1a bis 1c die erwähnten Parameter dar. Die Bausteine 1a bis 1c mit ihrer jeweiligen beschriebenen Funktionalität, wie beispielsweise der Vergleich der beiden Motor-Geschwindigkeitswerte v1 und v2 durch den Baustein 1a oder der Vergleich des Motor-Geschwindigkeitswertes v mit der vorgegebenen Verzögerung nach Auslösen des Abschaltsignals bzw. des dritten Ausgangssignals O3 durch den Baustein 1c, werden insbesondere als Funktionselemente bzw. Logikelemente definiert. Die Übermittlung der Ausgangssignale O1 bis O4 stellt beispielsweise jeweils ein Kommunikationselement des Geräts 1 dar, das durch den Nutzer ebenfalls definiert werden kann.

In einem Schritt b) weist der Nutzer Werte zu den Parametern zu. Der dem Parameter zugewiesene Wert kann vorzugsweise ein logisches Wahr oder Falsch, eine Zahl, einen Zahlenbereich oder eine Funktion sein.

Das heißt, die Eingangssignale I1 und I2 werden, gemäß dem Ausführungsbeispiel, zum Zeitpunkt der Konfiguration vom Nutzer den entsprechenden am Motor zu erfassenden Motor-Geschwindigkeitswerten v1 und v2 in Form von Zahlen zugewiesen. Die Eingangssignale I3 und I4 sind entweder der Motor-Geschwindigkeitswert v in Form von Zahlen oder einem booleschen Wert in Form des Fehlersignals zugewiesen. Das Eingangssignal I5 ist einem booleschen Wert in Form des "*Stop*"-Signals oder des "*Nicht-Stop*"-Signals zugeordnet. Dem dritten und vierten Ausgangssignal O3 und O4 sind beispielsweise jeweils ein logisches Wahr oder Falsch zugewiesen, wobei das logische Wahr zum Beispiel für das Abschalten bzw. das Einschalten der Bremse steht und das logische Falsch für ein Nichtabschalten bzw. ein Nichteinschalten der Bremse steht.

In dem gezeigten Ausführungsbeispiel werden den Bausteinen 1a bis 1c jeweils eine Funktion als Wert zugewiesen, so dass beispielsweise der Baustein 1a die beiden Geschwindigkeitswerte v1 und v2, die als Werte dem ersten und zweiten Eingangssignal I1 und I2 zugewiesen sind, miteinander vergleicht und das entsprechende erste Ausgangssignal O1 ausgibt.

Der Baustein 1b vergleicht den Motor-Geschwindigkeitswert v mit dem vorgegeben Schwellenwert und gibt das entsprechende zweite Ausgangssignal O2 aus.

Wie bereits erwähnt, überprüft der Baustein 1c den Geschwindigkeitswert v des vierten Eingangssignals I4 und ein Vorhandensein des "*Stop*"-Signals als fünftes Eingangssignals I5, um das dritte oder vierte Ausgangssignal O3 oder O4 zu erzeugen und auszugeben.

Die beschriebenen Schritte a) und b) können vorzugsweise mittels einer sicherheitsgerichteten ersten Programmiermethode durchgeführt werden, bei der beispielweise ein grafisch basiertes Engineering-Tool verwendet werden kann. Mit Ausführung der Schritte a) und b) hat der Nutzer das Gerät 1 bzw. der dargestellte Logikschaltkreis zur Geschwindigkeitsüberwachung konfiguriert.

In einem Schritt c) beschreibt der Nutzer wenigstens einer vom Nutzer erwarteten Geräteeigenschaft des Geräts 1 bzw. des dargestellten Logikschaltkreises, die durch die erstellte Konfiguration erfüllt sein soll. Das heißt, die genannte Geräteeigenschaft gibt eine Intention des Nutzers mit der beabsichtigten Konfiguration wieder, so dass die Geräteeigenschaft insbesondere ein durch die Parameter vorgegebenes Verhalten repräsentiert, das das Gerät 1 auszuführen hat.

Das von dem dargestellten Logikschaltkreis erwartete Verhalten sind die beschriebene Überwachung der Motor-Geschwindigkeitswerte v1, v2 und v und die entsprechende Geschwindigkeitsabnahme durch den Eingriff des Bausteins 1c, wenn das Fehlersignal, das Überschreiten des Schwellenwertes für den Motor-Geschwindigkeitswert v und/oder das Abschalten des Motors auftritt bzw. auftreten.

Bezogen auf das dargestellte Ausführungsbeispiel in der Figur 1, spezifiziert der Nutzer beispielsweise eine logische Formel, nach der der Baustein 1c eine vorgegebene Abnahme der Geschwindigkeit nach dem Erzeugen des dritten oder vierten Ausgangssignals O3 oder O4 gewährleisten soll. Die beschriebene logische Formel als zugewiesener Wert des Bausteins 1c überprüft beispielsweise den Geschwindigkeitswert v als Wert des vierten Eingangssignals I4 zu unterschiedlichen Zeitpunkten, um festzustellen, ob ein Abschaltverhalten bzw. die Geschwindigkeitsabnahme wie gewünscht erfolgt oder nicht. Falls das Abschaltverhalten bzw. die Geschwindigkeitsabnahme unzureichend sein sollten, das heißt nicht schnell genug wie vom Nutzer gewünscht, setzt der Baustein 1c das vierte Ausgangssignal O4, um die Bremse einzuschalten. Das heißt, die erwartete Geräteeigenschaft kann in Schritt c) insbesondere durch Laufzeitwerte beschrieben werden, wobei die erwartete Geräteeigenschaft insbesondere für mindestens zwei verschiedene Zeitpunkte spezifiziert wird.

Vorzugsweise wird das Beschreiben der erwarteten Geräteeigenschaft mittels einer Programmiersprache, einer Spezifikation der logischen Formel, einer Auswahl aus einer Menge von toolseitig vordefinierten Geräteeigenschaften, einer Konfiguration über Parameterwerte, einer Spezifikation eines Ablaufdiagramms oder einer Spezifikation einer Baumstruktur durchgeführt, so dass in Abhängigkeit der Werte der ersten bis fünften Eingangssignale I1 bis I5 die gewünschten Ergebnisse der Bausteine 1a bis 1c deutlich wiedergegeben werden.

Vorzugsweise wird das Beschreiben im Schritt c) mittels eines Assistentenprogramms durchgeführt, wobei das Assistentenprogramm durch gezielte Fragestellungen an den Nutzer zu der vom Nutzer gewünschten Geräteeigenschaft hinführt, die überprüft werden soll. In diesem Ausführungsbeispiel kann die Nachfrage beispielsweise *"Nach wieviel Millisekunden soll der Motor nach Erzeugung des _{"}Stop"⁻Signa*/*s zum Stillstand gekommen sein?", "Nach wieviel Millisekunden nach dem Stop-Signal soll das Drehmoment des Motors unter die minimal erlaubte Geschwindigkeit gefallen sein?", oder "Wie hoch ist die minimal erlaubte Geschwindigkeit?"* an dem Nutzer lauten. Der Nutzer gibt dann die entsprechenden Zahlen vor, die durch den Baustein 1c einzuhalten sind.

Dadurch ist eine vereinfachte Ausführung des Schrittes c) für den Nutzer möglich, um die korrekte, vom Nutzer intendierte Geräteeigenschaft des Geräts 1 zu erhalten.

Vor allem werden die Erstellung der konfigurierten Geräteeigenschaft in den Schritten a) und b) und die Beschreibung der erwarteten Geräteeigenschaft im Schritt c) auf verschiedene Weise und insbesondere, aber nicht zwingend, mittels unterschiedlichen Tools ausgeführt, so dass beispielsweise sich eine Intention des Nutzers bzgl. der Konfiguration des Geräts 1 wahrscheinlicher ergibt als sich ein Denkfehler bei der Konfiguration wiederholt.

Mit anderen Worten, die Konfiguration in den Schritten a) und b) beschreibt das *"Wie",* das heißt die Arbeitsweise bzw. das ausgeführte Programm auf dem Gerät 1, wohingegen die erwartete Geräteeigenschaft in dem Schritt c) das *"Was"* beschreibt, also deklarativ die gewünschte/n Eigenschaft/en des konfigurierten Geräts 1.

In einem Schritt d) wird ein automatisches Überprüfen ausgeführt, ob die konfigurierte Geräteeigenschaft aus dem Schritt b) und die beschriebene, erwartete Geräteeigenschaft aus dem Schritt c) zu übereinstimmenden Ergebnissen des Geräts 1 führen oder ob sich zumindest ein Ergebnis der konfigurierten Geräteeigenschaft ergibt, das zu einem Widerspruch zu den Ergebnissen der erwarteten Geräteeigenschaft führt.

Das heißt, insbesondere ein Algorithmus vergleicht im Schritt d) alle aus der konfigurierten Geräteeigenschaft resultierenden Ergebnissen mit den aus der beschriebenen erwarteten Geräteeigenschaft resultierenden Ergebnissen, so dass vorteilhafterweise der Algorithmus zumindest einen Wert identifiziert und anzeigt, der zu einer Abweichung zwischen der konfigurierten Geräteeigenschaft und der erwarteten Geräteeigenschaft geführt hat, sofern eine solche Abweichung gefunden wurde.

Bezogen auf das bevorzugte Ausführungsbeispiel in der Figur 1 bedeutet dies beispielsweise, dass einerseits überprüft wird, ob die konfigurierte Geräteeigenschaft bei einer festgestellten Überschreitung des Schwellenwertes für den Motor-Geschwindigkeitswert v durch den Baustein 1b zu dem Absetzen des Abschaltsignals durch den Baustein 1c führt, und andererseits, ob die erwartete Geräteeigenschaft bei der festgestellten Überschreitung des Schwellenwertes für den Motor-Geschwindigkeitswert v zu der entsprechenden Geschwindigkeitsabnahme führt.

Wenn das Überprüfen im Schritt d) zu diesen Ergebnissen führt, ist es ableitbar, dass ein übereinstimmendes Ergebnis festgestellt werden konnte. Hierbei wird insbesondere im Schritt d) die konfigurierte Geräteeigenschaft entsprechend den zugewiesenen Werten zu einem Zustand der Eingangs- und Ausgangssignale I1 bis I5 und O1 bis O4 und der jeweiligen Bausteine 1a bis 1c überprüft. Die erwartete Geräteeigenschaft wird insbesondere in Abhängigkeit von mehreren Zeitpunkten der Eingangs- und Ausgangssignale I1 bis I5 und O1 bis O4 überprüft.

Der Algorithmus identifiziert und zeigt vorteilhafterweise einen zeitlichen Verlauf über mindestens zwei Zeitpunkte an, der zu einer Abweichung zwischen der konfigurierten Geräteeigenschaft und der erwarteten Geräteeigenschaft geführt hat, sofern ein solcher zeitliche Verlauf gefunden wurde.

Ein Überprüfungsergebnis aus dem Schritt d) wird in einem Schritt e) angezeigt, so dass die automatische Überprüfung durch den Nutzer bewertet wird. Im Falle, dass das obige übereinstimmende Ergebnis angezeigt wird, kann der Nutzer die Richtigkeit der Konfiguration feststellen. Falls beispielsweise der Baustein 1b trotz der Überschreitung des Schwellenwertes kein Abschaltsignal absetzt oder die Geschwindigkeitsabnahme nicht der Funktion des Bausteins 1c entspricht, so ist der Nutzer in der Lage, die Konfiguration als fehlerhaft zu bewerten und gegebenenfalls die Konfiguration zu korrigieren.

Vorteilhafterweise werden im Schritt e) alle konsistenten bzw. erfüllten Ergebnisse bzw. Geräteeigenschaften oder zumindest eine konfigurierte Geräteeigenschaft, die zu der Abweichung geführt hat, angezeigt, so dass der Nutzer auf einfache Weise eine mögliche Fehlerquelle seiner Konfiguration lokalisieren kann. Hierbei wird insbesondere bei einer Mehrzahl an Eingangs- und Ausgangssignalen I1 bis I5 und O1 bis O4 und Bausteine 1a bis 1c der Parameter im Schritt e) angezeigt, der zu einer Inkonsistenz zwischen den Ergebnissen der konfigurierten und erwarteten Geräteeigenschaft geführt hat.

Mit anderen Worten, nach der automatischen Überprüfung werden dem Nutzer entweder alle Eingangs- und Ausgangssignale I1 bis I5 und O1 bis O4 und Bausteine 1a bis 1c mit den zugehörigen Werten angezeigt, die zu einem vom Nutzer gewünschten Ergebnis bzw. Verhalten des Geräts 1 geführt haben, oder zumindest ein Beispiel mit Werten für die Eingangs- und Ausgangssignale I1 bis I5 und O1 bis O4 und Bausteine 1a bis 1c angezeigt, das nicht zu dem vom Nutzer gewünschten Ergebnis bzw. Verhalten des Geräts 1 geführt hat.

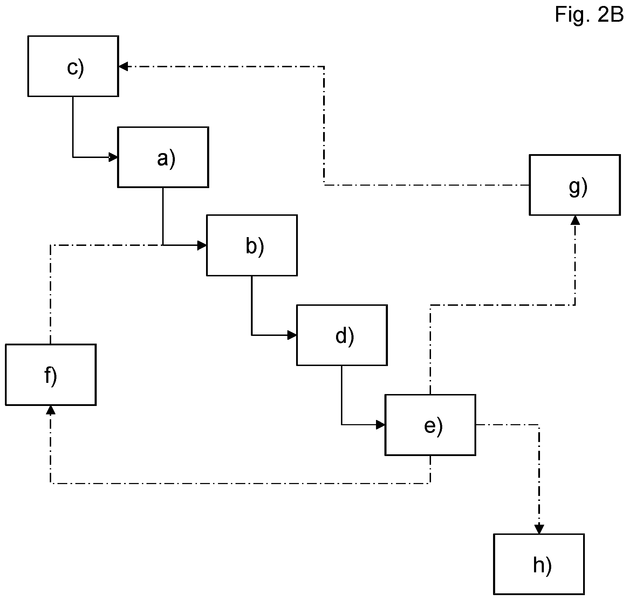

In der Figur 2B ist ein schematischer Ablauf eines weiteren Ausführungsbeispiels des erfindungsgemäßen Verfahrens gezeigt, bei dem beispielsweise gegenüber dem vorherigen Ausführungsbeispiel der Schritt c) vor den Schritten a) und b) ausgeführt wird. Das heißt, der Schritt c) ist chronologisch nicht von den Schritten a) und b) zwingend abhängig, sondern kann davor oder auch danach ausgeführt werden.

Nach dem Schritt e) des Anzeigens des Überprüfungsergebnisses führt dieses Ausführungsbeispiel des Verfahrens zu einem Schritt f), bei dem dem Nutzer eine Korrekturmöglichkeit der angezeigten Parameter und/oder der zugewiesenen Werte des Parameters, der bzw. die zu der Inkonsistenz geführt hat bzw. hatten, bereitgestellt wird.

Hierdurch ist es dem Nutzer möglich, das Zuweisen der Werte im Schritt b) zu korrigieren.

Zusätzlich kann das Verfahren zu einem Schritt g) führen, in dem dem Nutzer eine Möglichkeit unterbreitet wird, seine Beschreibung der erwarteten Geräteeigenschaft im Schritt c) zu präzisieren, um seine Intention mit der konfigurierten Geräteeigenschaft noch genauer für die automatische Überprüfung zu formulieren oder zusätzliche Geräteeigenschaften durch die automatische Überprüfung mitberücksichtigen zu lassen.

In dem Ausführungsbeispiel könnte dies wie folgt so aussehen:
- Der Nutzer spezifiziert zunächst, dass der Motor nach maximal 200 Millisekunden nach dem "*Stop*"-Signal zum Stillstand gekommen sein muss.
- Der Algorithmus aus Schritt d) findet daraufhin eine Ausführung, bei der gilt, dass 200 Millisekunden nach dem "*Stop*"-Signal das Drehmoment noch eine Geschwindigkeit von 1m/s hat, und das Brems-Signal gesetzt ist.
- Nach der Betrachtung dieser gefundenen Ausführung könnte der Nutzer feststellen, dass die Ausführung entgegen der ersten Erwartungshaltung dennoch in Ordnung ist, weil er z.B. a) feststellt, dass ein Drehmoment von 1m/s zu tolerieren ist (also "Stillstand" eine zu starke Forderung war), oder b) dass zwar 1m/s zu hoch ist, aber da zusätzlich das Bremssignal gesetzt ist, die 1m/s sehr schnell weiter abnehmen werden, und dies daher toleriert werden kann. Der Nutzer hätte dann die Möglichkeit, die erwartete Eigenschaft anzupassen, zum Beispiel zu:
   ∘ Im Fall a) zu "Nach dem "*Stop*"-Signal soll das Drehmoment des Motors nach 200 Millisekunden kleiner oder gleich 1m/s sein."
   ∘ Im Fall b) zu "Nach dem "*Stop*"-Signal soll nach 200 Millisekunden der Motor zum Stillstand gekommen oder das Brems-Signal gesetzt sein."
   ∘ Eine Kombination von Fall a) und b).

Ein erneutes automatisches Überprüfen, entweder der korrigierten zugewiesenen Werte oder der spezifizierten Beschreibung der erwarteten Geräteeigenschaft, kann durchgeführt werden, so dass durch eine genauere Überprüfung eine korrekte Konfiguration des Geräts 1 erhältlich ist. Hierbei kann vorzugsweise das automatische Überprüfen manuell vom Nutzer oder automatisch nach Erfassen eines ersten Widerspruchs oder nach Ablauf einer maximalen Überprüfungszeit beendet werden.

Im Falle, dass die Überprüfung im Schritt d) durchgeführt ist, folgt auf den Schritt e) ein Schritt h), bei dem der Nutzer die Konfiguration validieren kann, so dass das Gerät 1 mit der korrekten und erfolgreich überprüften Konfiguration eingesetzt werden kann.

### Bezugszeichenliste

- 1: Gerät
- 1a, 1b, 1c: Parameter/ Logik-Baustein
- I1: Parameter / Erstes Eingangssignal
- I2: Parameter / Zweites Eingangssignal
- I3: Parameter /Drittes Eingangssignal
- I4: Parameter /Viertes Eingangssignal
- I5: Parameter /Fünftes Eingangssignal
- O1: Parameter /Erstes Ausgangssignal
- O2: Parameter /Zweites Ausgangssignal
- O3: Parameter /Drittes Ausgangssignal
- O4: Parameter /Viertes Ausgangssignal
- v, v1, v2: Geschwindigkeitswert

## Patentansprüche

1. Verfahren zum Überprüfen einer Konfiguration eines elektronischen Geräts (1) mit zumindest einem Parameter (I1 bis I5; O1 bis O4; 1a, 1b, 1c), umfassend die Schritte:
a) Bereitstellen des Parameters (I1 bis I5; O1 bis O4; 1a, 1b, 1c),
b) Zuweisen von Werten (v1, v2, v) zu dem Parameter (I1 bis I5; O1 bis O4; 1a, 1b, 1c), so dass die Konfiguration des Geräts (1) erstellt ist, wobei die zugewiesenen Werte (v1, v2, v) eine konfigurierte Geräteeigenschaft des Geräts (1) bewirken,
c) Beschreiben von wenigstens einer vom Nutzer erwarteten Geräteeigenschaft des Geräts (1), die durch die erstellte Konfiguration erfüllt werden soll,
d) automatisches Überprüfen, ob die konfigurierte Geräteeigenschaft aus dem Schritt b) und die beschriebene, erwartete Geräteeigenschaft aus dem Schritt c) zu übereinstimmenden Ergebnissen des Geräts (1) führen oder ob sich zumindest ein Ergebnis der konfigurierten Geräteeigenschaft ergibt, das zu einem Widerspruch zu den Ergebnissen der erwarteten Geräteeigenschaft führt, und
e) Anzeigen eines Überprüfungsergebnisses aus dem Schritt d), um das automatische Überprüfen durch den Nutzer bewertet zu werden.

2. Verfahren nach Anspruch 1, wobei der Parameter (I1 bis I5; O1 bis O4; 1a, 1b, 1c) als Funktionselement, Logikelement oder Kommunikationselement zwischen den Funktionselementen bzw. Logikelementen definiert wird und die Werte des Parameters (I1 bis I5; O1 bis O4; 1a, 1b, 1c) ein logisches Wahr oder Falsch, eine Zahl, einen Zahlenbereich oder eine Funktion umfassen.

3. Verfahren nach Anspruch 1 oder 2, wobei das Beschreiben im Schritt c) mittels einer Programmiersprache oder mittels einer Spezifikation einer logischen Formel oder mittels einer Auswahl aus einer Menge von toolseitig vordefinierten Geräteeigenschaften oder mittels einer Konfiguration über Parameterwerte oder mittels einer Spezifikation eines Ablaufdiagramms oder mittels einer Spezifikation einer Baumstruktur durchgeführt wird.

4. Verfahren nach Anspruch 1 oder 2, wobei das Beschreiben im Schritt c) mittels eines Assistentenprogramms durchgeführt wird, wobei das Assistentenprogramm durch gezielte Fragestellungen an den Nutzer zu der vom Nutzer gewünschten Geräteeigenschaft hinführt, die überprüft werden soll.

5. Verfahren nach einem der vorhergehenden Ansprüche 1 bis 5, wobei in Schritt c) die erwartete Geräteeigenschaft durch Laufzeitwerte beschrieben wird, wobei insbesondere die erwartete Geräteeigenschaft für mindestens zwei verschiedene Zeitpunkte spezifiziert wird.

6. Verfahren nach einem der vorhergehenden Ansprüche 1 bis 6, wobei das Überprüfen im Schritt d) mittels eines Algorithmus ausgeführt wird, der alle aus der konfigurierten Geräteeigenschaft resultierenden Ergebnissen mit den aus der erwarteten Geräteeigenschaft resultierenden Ergebnissen vergleicht.

7. Verfahren nach Anspruch 6, wobei der Algorithmus zumindest einen Wert identifiziert und anzeigt, der zu einer Abweichung zwischen der konfigurierten Geräteeigenschaft und der erwarteten Geräteeigenschaft geführt hat, sofern eine solche Abweichung gefunden wurde.

8. Verfahren nach einem der vorhergehenden Ansprüche 1 bis 7, wobei im Schritt d) die konfigurierte Geräteeigenschaft entsprechend den zugewiesenen Werten zu einem Zustand des Parameters (I1 bis I5; O1 bis O4; 1a, 1b, 1c) überprüft wird und die erwartete Geräteeigenschaft in Abhängigkeit von mehreren Zeitpunkten des Parameters (I1 bis I5; O1 bis O4; 1a, 1b, 1c) überprüft wird.

9. Verfahren nach Anspruch 6 und 8, wobei der Algorithmus einen zeitlichen Verlauf über mindestens zwei Zeitpunkte identifiziert und anzeigt, der zu einer Abweichung zwischen der konfigurierten Geräteeigenschaft und der erwarteten Geräteeigenschaft geführt hat, sofern ein solcher zeitliche Verlauf gefunden wurde.

10. Verfahren nach einem der vorhergehenden Ansprüche 1 bis 9, wobei das Überprüfungsergebnis alle konsistenten bzw. erfüllten Ergebnisse bzw. Geräteeigenschaften oder zumindest eine konfigurierte Geräteeigenschaft, die zu der Abweichung geführt hat, anzeigt.

11. Verfahren nach zumindest einem der vorhergehenden Ansprüche 1 bis 10, wobei bei einer Mehrzahl an Parametern (I1 bis I5; O1 bis O4; 1a, 1b, 1c) der Parameter (I1 bis I5; O1 bis O4; 1a, 1b, 1c) im Schritt e) angezeigt wird, der zu einer Inkonsistenz zwischen den Ergebnissen der konfigurierten Geräteeigenschaft und der erwarteten Geräteeigenschaft geführt hat.

12. Verfahren nach Anspruch 11, wobei eine Korrekturmöglichkeit der angezeigten Parameter (I1 bis I5; O1 bis O4; 1a, 1b, 1c) und/oder der zugewiesenen Werte (v1, v2, v) des Parameters (I1 bis I5; O1 bis O4; 1a, 1b, 1c) dem Nutzer bereitgestellt wird, um die Inkonsistenz zu beseitigen.

13. Verfahren nach zumindest einem der vorhergehenden Ansprüche 1 bis 12, wobei das Beschreiben der erwarteten Geräteeigenschaft im Schritt c) nach den Schritten a) und b) oder auch vor denselben ausführbar ist.

14. Verfahren nach zumindest einem der vorhergehenden Ansprüche 1 bis 13, wobei anhand des Überprüfungsergebnisses im Schritt d) eine genauere Spezifizierung der beschriebenen, erwarteten Geräteeigenschaft im Schritt c) oder ein Hinzufügen von weiteren erwarteten Geräteeigenschaften zum Überprüfen oder eine Validierung der erstellten Konfiguration in einem Schritt f) bereitgestellt wird, wobei insbesondere eine Auswahl der genaueren Spezifikation zusätzlich aus einer vom Tool vorgeschlagenen Menge dem Nutzer bereitgestellt wird, und wobei insbesondere die genauere Spezifikation sich sowohl auf die erwarteten Geräteeigenschaften als auch auf zu erwartende Werte beziehen kann.

15. Verfahren nach einem der vorhergehenden Ansprüche 1 bis 14, wobei das automatische Überprüfen manuell vom Nutzer oder automatisch nach Erfassen eines ersten Widerspruchs oder nach Ablauf einer maximalen Überprüfungszeit beendet wird.

## Geänderte Patentansprüche

### Geänderte Patentansprüche gemäss Regel 137(2) EPÜ.

1. Verfahren zum Überprüfen einer Konfiguration eines elektronischen Geräts (1) mit zumindest einem Parameter (I1 bis I5; O1 bis O4; 1a, 1b, 1c), umfassend die Schritte:
a) Bereitstellen des Parameters (I1 bis I5; O1 bis O4; 1a, 1b, 1c),
b) Zuweisen von Werten (v1, v2, v) zu dem Parameter (I1 bis I5; O1 bis O4; 1a, 1b, 1c), so dass die Konfiguration des Geräts (1) erstellt ist, wobei die zugewiesenen Werte (v1, v2, v) eine konfigurierte Geräteeigenschaft des Geräts (1) bewirken,
c) Beschreiben von wenigstens einer vom Nutzer erwarteten Geräteeigenschaft des Geräts (1), die durch die erstellte Konfiguration erfüllt werden soll,
d) automatisches Überprüfen, ob die konfigurierte Geräteeigenschaft aus dem Schritt b) und die beschriebene, erwartete Geräteeigenschaft aus dem Schritt c) zu übereinstimmenden Ergebnissen des Geräts (1) führen oder ob sich zumindest ein Ergebnis der konfigurierten Geräteeigenschaft ergibt, das zu einem Widerspruch zu den Ergebnissen der erwarteten Geräteeigenschaft führt, und
e) Anzeigen eines Überprüfungsergebnisses aus dem Schritt d), um das automatische Überprüfen durch den Nutzer bewertet zu werden,
**dadurch gekennzeichnet, dass** der Parameter (I1 bis I5; O1 bis O4; 1a, 1b, 1c) als Funktionselement, Logikelement oder Kommunikationselement zwischen den Funktionselementen bzw. Logikelementen definiert wird und die Werte des Parameters (I1 bis I5; O1 bis O4; 1a, 1b, 1c) ein logisches Wahr oder Falsch, eine Zahl, einen Zahlenbereich oder eine Funktion umfassen, wobei das Überprüfen im Schritt d) mittels eines auf einer Brute-Force-Methodik oder Abstraktions-Methodik beruhenden Algorithmus ausgeführt wird, der alle aus der konfigurierten Geräteeigenschaft resultierenden Ergebnissen mit den aus der erwarteten Geräteeigenschaft resultierenden Ergebnissen vergleicht.

2. Verfahren nach Anspruch 1, **dadurch gekennzeichnet, dass** das Beschreiben im Schritt c) mittels einer Programmiersprache oder mittels einer Spezifikation einer logischen Formel oder mittels einer Auswahl aus einer Menge von toolseitig vordefinierten Geräteeigenschaften oder mittels einer Konfiguration über Parameterwerte oder mittels einer Spezifikation eines Ablaufdiagramms oder mittels einer Spezifikation einer Baumstruktur durchgeführt wird.

3. Verfahren nach Anspruch 1, **dadurch gekennzeichnet, dass** das Beschreiben im Schritt c) mittels eines Assistentenprogramms durchgeführt wird, wobei das Assistentenprogramm durch gezielte Fragestellungen an den Nutzer zu der vom Nutzer gewünschten Geräteeigenschaft hinführt, die überprüft werden soll.

4. Verfahren nach einem der vorhergehenden Ansprüche 1 bis 3, **dadurch gekennzeichnet, dass** in Schritt c) die erwartete Geräteeigenschaft durch Laufzeitwerte beschrieben wird, wobei insbesondere die erwartete Geräteeigenschaft für mindestens zwei verschiedene Zeitpunkte spezifiziert wird.

5. Verfahren nach Anspruch 4, **dadurch gekennzeichnet, dass** der Algorithmus zumindest einen Wert identifiziert und anzeigt, der zu einer Abweichung zwischen der konfigurierten Geräteeigenschaft und der erwarteten Geräteeigenschaft geführt hat, sofern eine solche Abweichung gefunden wurde.

6. Verfahren nach einem der vorhergehenden Ansprüche 1 bis 5, **dadurch gekennzeichnet, dass** im Schritt d) die konfigurierte Geräteeigenschaft entsprechend den zugewiesenen Werten zu einem Zustand des Parameters (I1 bis I5; O1 bis O4; 1a, 1b, 1c) überprüft wird und die erwartete Geräteeigenschaft in Abhängigkeit von mehreren Zeitpunkten des Parameters (I1 bis I5; O1 bis O4; 1a, 1b, 1c) überprüft wird.

7. Verfahren nach Anspruch 1 und 6, **dadurch gekennzeichnet, dass** der Algorithmus einen zeitlichen Verlauf über mindestens zwei Zeitpunkte identifiziert und anzeigt, der zu einer Abweichung zwischen der konfigurierten Geräteeigenschaft und der erwarteten Geräteeigenschaft geführt hat, sofern ein solcher zeitliche Verlauf gefunden wurde.

8. Verfahren nach einem der vorhergehenden Ansprüche 1 bis 7, **dadurch gekennzeichnet, dass** das Überprüfungsergebnis alle konsistenten bzw. erfüllten Ergebnisse bzw. Geräteeigenschaften oder zumindest eine konfigurierte Geräteeigenschaft, die zu der Abweichung geführt hat, anzeigt.

9. Verfahren nach zumindest einem der vorhergehenden Ansprüche 1 bis 8, **dadurch gekennzeichnet, dass** bei einer Mehrzahl an Parametern (I1 bis I5; O1 bis O4; 1a, 1b, 1c) der Parameter (l1 bis I5; O1 bis O4; 1a, 1b, 1c) im Schritt e) angezeigt wird, der zu einer Inkonsistenz zwischen den Ergebnissen der konfigurierten Geräteeigenschaft und der erwarteten Geräteeigenschaft geführt hat.

10. Verfahren nach Anspruch 9, **dadurch gekennzeichnet, dass** eine Korrekturmöglichkeit der angezeigten Parameter (l1 bis I5; O1 bis O4; 1a, 1b, 1c) und/oder der zugewiesenen Werte (v1, v2, v) des Parameters (I1 bis I5; O1 bis O4; 1a, 1b, 1c) dem Nutzer bereitgestellt wird, um die Inkonsistenz zu beseitigen.

11. Verfahren nach zumindest einem der vorhergehenden Ansprüche 1 bis 10, **dadurch gekennzeichnet, dass** das Beschreiben der erwarteten Geräteeigenschaft im Schritt c) nach den Schritten a) und b) oder auch vor denselben ausführbar ist.

12. Verfahren nach zumindest einem der vorhergehenden Ansprüche 1 bis 11, **dadurch gekennzeichnet, dass** anhand des Überprüfungsergebnisses im Schritt d) eine genauere Spezifizierung der beschriebenen, erwarteten Geräteeigenschaft im Schritt c) oder ein Hinzufügen von weiteren erwarteten Geräteeigenschaften zum Überprüfen oder eine Validierung der erstellten Konfiguration in einem Schritt f) bereitgestellt wird, wobei insbesondere eine Auswahl der genaueren Spezifikation zusätzlich aus einer vom Tool vorgeschlagenen Menge dem Nutzer bereitgestellt wird, und wobei insbesondere die genauere Spezifikation sich sowohl auf die erwarteten Geräteeigenschaften als auch auf zu erwartende Werte beziehen kann.

13. Verfahren nach einem der vorhergehenden Ansprüche 1 bis 12, **dadurch gekennzeichnet, dass** das automatische Überprüfen manuell vom Nutzer oder automatisch nach Erfassen eines ersten Widerspruchs oder nach Ablauf einer maximalen Überprüfungszeit beendet wird.
